# EUROPEAN PATENT APPLICATION

(11) **EP 4 722 058 A1**
(43) Date of publication of application: **08.04.2026**
(21) Application number: 25203214.9
(22) Date of filing: 18.09.2025
(51) Int. Cl.: B60W 10/08, B60W 10/18, B60W 50/023, B60W 50/029, B60W 60/00, G05D 1/85, G05D 1/87, G06F 11/16

(54) **VEHICLE**

(30) Priority: 01.10.2024 JP 2024172450
(71) Applicant: TOYOTA JIDOSHA KABUSHIKI KAISHA, Toyota-shi, Aichi-ken 471-8571 (JP)
(72) Inventor: TANAKA, Go, TOYOTA-SHI, AICHI-KEN, 471-8571 (JP); SUZUKI, Ikuma, TOYOTA-SHI, AICHI-KEN, 471-8571 (JP); HAYASHI, Taisuke, TOYOTA-SHI, AICHI-KEN, 471-8571 (JP); OZAWA, Kazuhiro, TOYOTA-SHI, AICHI-KEN, 471-8571 (JP); WATARI, Yuji, TOYOTA-SHI, AICHI-KEN, 471-8571 (JP)
(74) Representative: Cabinet Beau de Loménie

(57) **Abstract**

A vehicle (100) comprises a vehicle control interface box (110) and a vehicle system (120). The vehicle control interface box (110) includes a first controller (111A) and a second controller (111B). The vehicle system (120) is configured to be capable of receiving a command from an autonomous driving kit (200) through each of a first path (170A) via the first controller (111A) and a second path (170B) via the second controller (111B). When only one of the plurality of paths fails while the vehicle is autonomously driven, the vehicle system (120) continues the autonomous driving based on a command received from the autonomous driving kit (200) through a path other than the failed path. When the first and second paths both fail while the vehicle is autonomously driven, the vehicle system (120) applies autonomous deceleration control to control a brake device (121) to decelerate the vehicle (100).

## Description

### CROSS REFERENCE TO RELATED APPLICATIONS

This application is based on Japanese Patent Application No. 2024-172450 filed on October 1, 2024 with the Japan Patent Office the entire contents of which are hereby incorporated by reference.

### BACKGROUND

### Field

The present disclosure relates to a vehicle that allows an autonomous driving kit to be mounted thereto.

### Description of the Background Art

Japanese Patent Laying-Open No. 2024-106017 discloses a vehicle allowing an autonomous driving kit to be mounted thereto. The vehicle comprises a vehicle control interface box and a vehicle system. The vehicle system is configured to be capable of receiving a command from the autonomous driving kit through each of a plurality of paths.

### SUMMARY

When any of the plurality of paths fails, the autonomous driving kit described in Japanese Patent Laying-Open No. 2024-106017 selects a path that does not fail, and the autonomous driving kit transmits a command through the selected path. When any of the plurality of paths fails, such control allows a failure-free path to be used to continue autonomous driving based on the command received from the autonomous driving kit. However, when a command path from the autonomous driving kit to the vehicle system fails, it is not always preferable to continue autonomous driving based on a command received from the autonomous driving kit. Furthermore, Japanese Patent Laying-Open No. 2024-106017 insufficiently discusses control applied when all paths fail.

The present disclosure has been made to solve the above problem, and an object thereof is to co-establish stability of autonomous driving control based on a command received from an autonomous driving kit and appropriate fail-safety for the autonomous driving control.

According to the present disclosure, a vehicle is provided, as follows:
(Clause 1) The vehicle is configured to allow an autonomous driving kit to be mounted thereto. The vehicle comprises a vehicle control interface box and a vehicle system. The vehicle control interface box includes a first controller and a second controller. The vehicle system includes a brake device configured to decelerate the vehicle. The vehicle system is configured to be capable of receiving a command from the autonomous driving kit through each of a plurality of paths. The plurality of paths include a first path via the first controller and a second path via the second controller. The vehicle system is configured to, in response to only one of the plurality of paths failing while the vehicle is autonomously driven, continue to autonomously drive the vehicle based on the command received from the autonomous driving kit through a path other than the failed path. Furthermore, the vehicle system is configured to, in response to the first and second paths both failing while the vehicle is autonomously driven, apply autonomous deceleration control to control the brake device to decelerate the vehicle.

When the plurality of paths (command paths) from the autonomous driving kit to the vehicle system has only one thereof failed, there is a high possibility that it is an accidental failure. There is also a possibility that an instantaneous failure due to an instantaneous voltage drop or noise is erroneously sensed as a permanent failure. Accordingly, in that case, the above configuration allows the vehicle system to continue autonomous driving based on a command received from the autonomous driving kit through another path that does not fail. Allowing autonomous driving to be continued based on the command received from the autonomous driving kit enhances autonomous driving control in stability.

In contrast, when two or more paths fail, there is a high possibility that it is not an accidental failure. Accordingly, when the first and second paths both fail while the vehicle is autonomously driven, the above configuration allows the vehicle system to apply the autonomous deceleration control. This provides appropriate fail-safety for the autonomous driving control. If all the paths should fail, the vehicle system can apply predetermined autonomous deceleration control. Furthermore, the first and second paths pass through the first and second controllers, respectively. Such first and second controllers facilitate sensing a failure for the first and second paths.

A failure of a path from the autonomous driving kit to the vehicle system means that the vehicle loses a function of transmitting a command received from the autonomous driving kit to the vehicle system through that path. For example, when a communication line on a path is disconnected, the path fails. Failure of transmission of a command from the autonomous driving kit to the vehicle system due to failure of the autonomous driving kit and/or the vehicle control interface box on a path also corresponds to a failure of the path. A failure of the vehicle system to receive a command from the autonomous driving kit due to a failure of a receiving function of the vehicle system for a path from the autonomous driving kit to the vehicle system also corresponds to a failure of the path.

(Clause 2) In the vehicle according to clause 1, the vehicle system further includes a third controller and a fourth controller configured to control the brake device. The first path is a path to pass the command from the autonomous driving kit to reach the third controller via the first controller. The second path is a path to pass the command from the autonomous driving kit to reach the fourth controller via the second controller.

In the above configuration, the third controller on the first path and the fourth controller on the second path each control the brake device. When the first and second paths both fail, the autonomous deceleration control described above can be applied by the third controller or the fourth controller. When one of the third and fourth controllers fails, the brake device still can be controlled by the other controller that does not fail.

(Clause 3) In the vehicle according to clause 2, the plurality of paths further include a third path to pass the command from the autonomous driving kit to reach the third controller via the second controller. When the first path does not fail, the third controller controls the brake device based on the command received from the autonomous driving kit through the first path. When the first path fails and the second and third paths each do not fail, the third controller controls the brake device based on the command received from the autonomous driving kit through the third path.

In the above configuration, when the first path does not fail, the third controller controls the brake device based on a command received from the autonomous driving kit through the first path. When the first to third paths have the first path alone failed, the third controller controls the brake device based on a command received from the autonomous driving kit through the third path. When the first path fails, the third controller still can continue the autonomous driving control (or control the brake device) based on a command received from the autonomous driving kit. This enhances the autonomous driving control in stability.

(Clause 4) In the vehicle according to clause 3, when the first and third paths both fail, the third controller or the fourth controller applies the autonomous deceleration control.

In the above configuration, the above-described autonomous deceleration control is applied not only when the first and second paths both fail but also when the first and third paths both fail. This contemplates co-establishment of stability of autonomous driving control based on a command received from the autonomous driving kit and appropriate fail-safety for the autonomous driving control.

(Clause 5) In the vehicle according to any one of clauses 1 to 4, the first controller is configured to determine whether communication between the autonomous driving kit and the first controller fails, and output a result of the determination to the vehicle system. The second controller is configured to determine whether communication between the autonomous driving kit and the second controller fails, and output a result of the determination to the vehicle system.

The above configuration helps the vehicle system to sense a failure for each of the first and second paths.

(Clause 6) In the vehicle according to any one of clauses 1 to 5, the vehicle control interface box is configured to switch the autonomous deceleration control between an enabled state and a disabled state based on a request received from the autonomous driving kit. The vehicle system is configured to apply the autonomous deceleration control only when the autonomous deceleration control is enabled.

When the user (a human) assumes sovereignty for controlling the vehicle, the user can drive the vehicle, and the autonomous deceleration control may not be applied when the first and second paths both fail. For example, when the autonomous driving kit is not attached to the vehicle or the autonomous driving kit is attached to the vehicle and is not in operation, the vehicle is manually driven by the user, and the autonomous deceleration control may not be applied. Accordingly, in the above configuration, the vehicle control interface box switches enabling/disabling the autonomous deceleration control based on a request received from the autonomous driving kit. This configuration helps the autonomous driving kit to set the autonomous deceleration control to be enabled/disabled, as appropriate, when the vehicle control interface box and the autonomous driving kit can communicate with each other. The autonomous driving kit may request to enable or disable the autonomous deceleration control depending on the autonomous driving level. The autonomous driving level is defined for example by "SAE (Society of Automotive Engineers) J3016", a standard of the Society of Automotive Engineers.

(Clause 7) In the vehicle according to clause 6, the vehicle control interface box is configured to prohibit switching of enabling/disabling the autonomous deceleration control while the vehicle is autonomously driven.

The autonomous driving control may become unstable when enabling/disabling the autonomous deceleration control is switched while the vehicle is autonomously driven. Accordingly, switching of enabling/disabling the autonomous deceleration control while the vehicle is autonomously driven is prohibited, as described above, to enhance the autonomous driving control in stability.

(Clause 8) In the vehicle according to any one of clauses 1 to 7, the vehicle system is configured to avoid obtaining a new command from the autonomous driving kit while the autonomous deceleration control is applied, and continue the autonomous deceleration control until the vehicle has a stationary status.

The above configuration allows the autonomous deceleration control to be applied to decelerate the vehicle to have a stationary status without the vehicle system obtaining a new command from the autonomous driving kit. This provides appropriate fail-safety for the autonomous driving control.

(Clause 9) In the vehicle according to any one of clauses 1 to 8, when the vehicle system determines that the first and second paths both fail while the autonomous driving kit transmits a deceleration request to decelerate the vehicle, the vehicle system controls the brake device in the autonomous deceleration control to cause deceleration for the vehicle to approach a larger one of a deceleration requested by the deceleration request and a predetermined deceleration.

The above configuration allows the vehicle to be decelerated at a deceleration equal to or larger than a predetermined deceleration. Furthermore, in the above configuration, when a deceleration requested by the autonomous driving kit when it is determined that the first and second paths both fail is larger than the predetermined deceleration, the vehicle is decelerated at the deceleration requested by the autonomous driving kit. This continues autonomous driving control (or to control the brake device) based on a command received from the autonomous driving kit, and enhances the autonomous driving control in stability.

(Clause 10) In the vehicle according to any one of clauses 1 to 9, the vehicle system further includes a vehicle drive device configured to accelerate the vehicle. When the vehicle system determines that the first and second paths both fail while the autonomous driving kit transmits an acceleration request to accelerate the vehicle, the vehicle system controls the vehicle drive device in the autonomous deceleration control to zero acceleration for the vehicle, and subsequently controls the brake device in the autonomous deceleration control to cause deceleration for the vehicle to approach a predetermined deceleration.

The above configuration can decelerate the vehicle, as appropriate, while the vehicle is accelerated as the vehicle system sequentially controls the vehicle drive device and the brake device.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 schematically shows a configuration of a vehicle according to an embodiment of the present disclosure.
Fig. 2 specifically illustrates a system of the vehicle shown in Fig. 1.
Fig. 3 is a diagram for illustrating a path from an autonomous driving kit to a vehicle system for the vehicle shown in Fig. 1.
Fig. 4 is a diagram for illustrating an example of a configuration of a brake control unit shown in Fig. 3.
Fig. 5 is a flowchart of a process performed in an autonomous driving method when autonomous driving starts according to an embodiment of the present disclosure.
Fig. 6 is a flowchart for details of a process for enabling/disabling autonomous deceleration control in the process flow indicated in Fig. 5.
Fig. 7 is a flowchart of a process for autonomous driving control applied by a vehicle control interface box shown in Fig. 2.
Fig. 8 is a flowchart of a process for autonomous driving control applied by the autonomous driving kit shown in Fig. 2.
Fig. 9 is a diagram for illustrating a process performed by a base vehicle shown in Fig. 2.
Fig. 10 is a flowchart of a process for driving control applied by the base vehicle shown in Fig. 2.
Fig. 11 is a flowchart showing details of autonomous deceleration control indicated in Fig. 9.
Fig. 12 is a flowchart of a first variation of the process flow indicated in Fig. 5.
Fig. 13 is a flowchart of a second variation of the process flow indicated in Fig. 5.
Fig. 14 is a diagram showing a variation of the configuration shown in Fig. 4.
Fig. 15 is a diagram showing a first variation of the configuration shown in Fig. 3.
Fig. 16 is a diagram showing a second variation of the configuration shown in Fig. 3.

### DESCRIPTION OF THE PREFERRED EMBODIMENTS

Hereinafter, an embodiment of the present disclosure will be described more specifically with reference to the drawings. In the figures, identical or equivalent components are identically denoted and will not be described repeatedly.

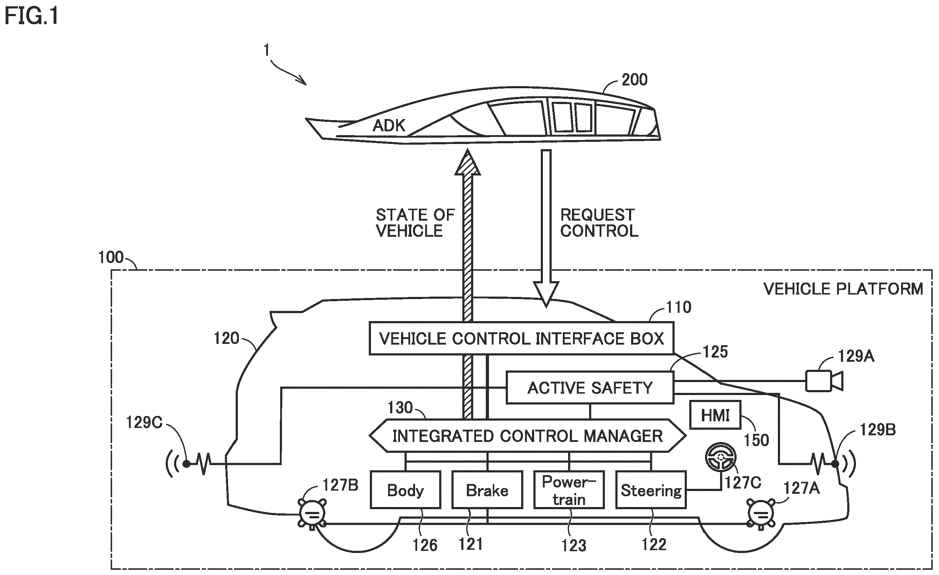

Fig. 1 shows a schematic configuration of a vehicle according to an embodiment of the present disclosure. Referring to Fig. 1, a vehicle 1 comprises a vehicle platform (VP) 100 and an autonomous driving kit (ADK) 200. VP 100 includes a vehicle control interface box (hereinafter denoted as "VCIB") 110 and a base vehicle 120. Adding VCIB 110 to base vehicle 120 forms VP 100 to allow ADK 200 to be detachably attached thereto. VCIB 110 is configured to communicate with both base vehicle 120 and ADK 200 via a communication bus. VCIB 110 may function as a gateway. And attaching ADK 200 to VP 100 completes vehicle 1. In the present embodiment, ADK 200 is attached to the rooftop of base vehicle 120. It should be noted, however, where ADK 200 is attached is changeable as appropriate.

Base vehicle 120 is, for example, a commercially available xEV (electrically driven vehicle). In the present embodiment, a battery electric vehicle (BEV) is employed as base vehicle 120. However, this is not exclusive, and base vehicle 120 may be an xEV other than a BEV. Base vehicle 120 includes an integrated control manager 130, a human-machine interface (HMI) 150, and a variety of types of systems and a variety of types of sensors (wheel speed sensors 127A and 127B, a steering angle sensor 127C, a camera 129A, radar sensors 129B and 129C, etc.) for controlling base vehicle 120. Integrated control manager 130 functions as a controller. Integrated control manager 130 operates based on a result of sensing by an in-vehicle sensor to generally control a variety of types of systems relevant to an operation of base vehicle 120. HMI 150 includes an input device and a notification device. Examples of the notification device include a display and a speaker. HMI 150 may include a touch panel display.

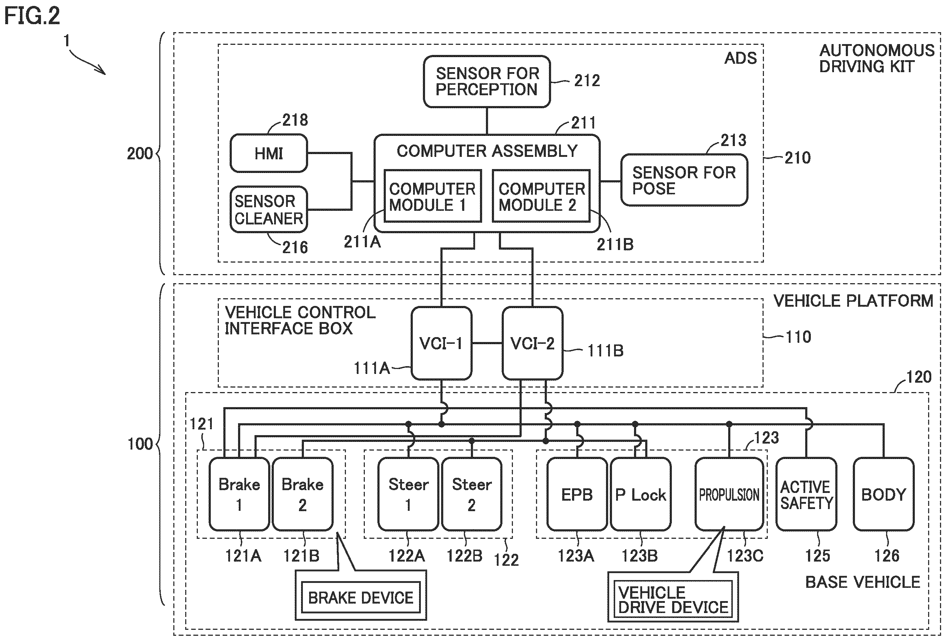

Fig. 2 specifically illustrates a system of vehicle 1. Referring to Fig. 2 together with Fig. 1, ADK 200 includes an autonomous driving system (hereinafter denoted as "ADS") 210 for autonomously driving vehicle 1. ADS 210 includes a computer assembly (hereinafter denoted as "ADSCOM") 211, a sensor for perception 212, a sensor for pose 213, a sensor cleaner 216, and a human-machine interface (HMI) 218.

ADSCOM 211 includes computer modules (hereinafter denoted as "ADCs") 211A and 211B. ADCs 211A and 211B each comprise a processor and a storage device that stores autonomous driving software using an API described hereinafter, and are each configured to be capable of executing the autonomous driving software by the processor. Sensor for perception 212 includes a sensor that obtains information (hereinafter also referred to as "environmental information") indicating an environment external to vehicle 1. Sensor for perception 212 may include at least one of a camera, a millimeter wave radar, and a lidar. Sensor for pose 213 obtains information (hereinafter also referred to as "pose information") for a pose of vehicle 1. Sensor for pose 213 may include a variety of types of sensors that sense an acceleration, angular velocity, and position of vehicle 1. HMI 218 includes an input device and a notification device.

Base vehicle 120 comprises a brake system 121, a steering system 122, a powertrain system 123, an active safety system 125, and a body system 126. In the present embodiment, each system comprises an electronic control unit (hereinafter also referred to as "ECU").

In vehicle 1, a control system for behaviors (travelling, stopping, and turning) of vehicle 1 has redundancy. As will more specifically be described hereinafter, ADCs 211A and 211B provide instructions to a main system and a subordinate system, respectively. VCIB 110 includes a VCI control unit 111A for the main system (hereinafter also denoted as "VCI-1") and a VCI control unit 111B for the subordinate system (hereinafter also denoted as "VCI-2"). VCI control units 111A and 111B may each be a computer comprising a processor and a storage device. VCI control units 111A and 111B may directly communicate with each system or may communicate therewith via integrated control manager 130 shown in Fig. 1.

Brake system 121 includes a brake device, an operation unit (e.g., a brake pedal) that receives a braking operation from a user, and a brake control unit 121A (hereinafter also denoted as "Brake 1") and a brake control unit 121B (hereinafter also denoted as "Brake 2"). Steering system 122 includes a steering device, an operation unit that receives a steering operation from the user, and steering control units 122A and 122B. Powertrain system 123 includes a shift device (not shown), an EPB device 123A, a P-Lock device 123B, and a propulsion system 123C. "EPB" means an electric parking brake, and "P-Lock" means parking lock.

The shift device determines a shift range and switches a propulsion direction and a shift mode for base vehicle 120 in accordance with the determined shift range. The shift device includes a transmission mechanism and an operation unit that receives a shifting operation from the user. Propulsion system 123C comprises a vehicle drive device, an operation unit (e.g., an accelerator pedal) that receives an accelerating operation from the user, and a propulsion control unit that controls the vehicle drive device. The vehicle drive device imparts a propulsive force to a wheel in a propulsion direction indicated by the shift range. The propulsive force accelerates base vehicle 120. The vehicle drive device comprises a battery and a travelling motor that receives electric power from the battery.

EPB device 123A for example comprises a parking brake mechanism, an electric actuator, and an operation unit (e.g., an EPB switch) that receives an EPB request from the user. EPB device 123A may be configured to apply a braking force to a wheel by the electric actuator (e.g., a motor) to fix (or immobilize) the wheel. P-Lock device 123B for example comprises a parking lock mechanism, an actuator, and an operation unit (e.g., a hand brake lever) that receives a parking operation from the user. P-Lock device 123B may be configured to mechanically fix a rotational position of an output shaft of the transmission by a parking lock pole drivable by the actuator.

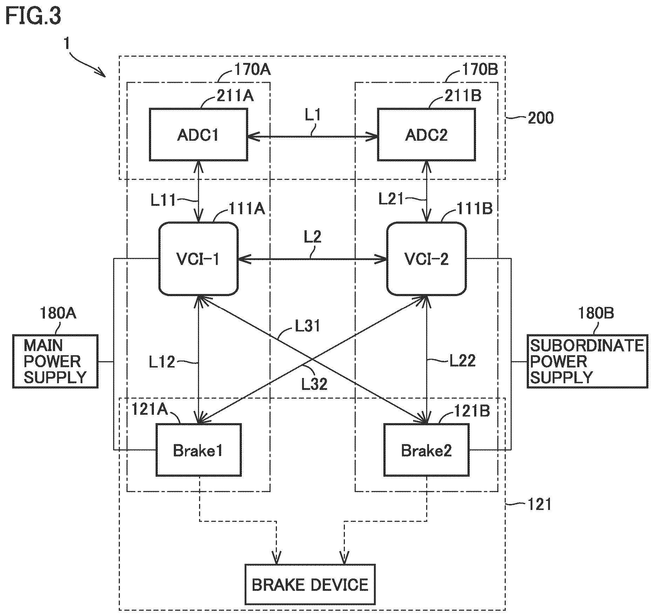

Fig. 3 is a diagram for illustrating a path (a command path) from the autonomous driving kit to the vehicle system.

Referring to Fig. 3, ADCs 211A and 211B are communicably interconnected via a communication line L1. VCI control units 111A and 111B are communicably interconnected via a communication line L2. ADC 211A and VCI control unit 111A are communicably interconnected via a communication line L11. VCI control unit 111A and brake control unit 121A are communicably interconnected via a communication line L12. ADC 211B and VCI control unit 111B are communicably interconnected via a communication line L21. VCI control unit 111B and brake control unit 121B are communicably interconnected via a communication line L22. VCI control unit 111A and brake control unit 121B are communicably interconnected via a communication line L31. VCI control unit 111B and brake control unit 121A are communicably interconnected via a communication line L32.

A main power supply 180A supplies power to VCI control unit 111A and brake control unit 121A. A subordinate power supply 180B supplies power to VCI control unit 111B and brake control unit 121B. Main power supply 180A and subordinate power supply 180B each output power lower in voltage than a driving battery (not shown). In the present embodiment, VCI control unit 111A, VCI control unit 111B, brake control unit 121A, and brake control unit 121B correspond to an example of a "first controller", a "second controller", a "third controller", and a "fourth controller", respectively, according to the present disclosure.

Brake system 121 is configured to be capable of receiving a command from ADK 200 through each of a plurality of paths. In the present embodiment, brake system 121 is configured to receive a command from ADK 200 through each of a first path, a second path, and a third path.

The first path is a path via VCI control unit 111A, and more specifically, it is a path through which a command from ADK 200 reaches brake control unit 121A via VCI control unit 111A (i.e., a path 170A in Fig. 3). The first path includes ADC 211A, communication line L11, VCI control unit 111A, communication line L12, and brake control unit 121A, and fails when at least one of them has an error.

The second path is a path via VCI control unit 111B, and more specifically, it is a path through which a command from ADK 200 reaches brake control unit 121B via VCI control unit 111B (i.e., a path 170B in Fig. 3). The second path includes ADC 211B, communication line L21, VCI control unit 111B, communication line L22, and brake control unit 121B, and fails when at least one of them has an error.

The third path is a path through which a command from ADK 200 reaches brake control unit 121A via VCI control unit 111B. The third path includes ADC 211B, communication line L21, VCI control unit 111B, communication line L32, and brake control unit 121A, and fails when at least one of them has an error.

In the present embodiment, the first path corresponds to the main system, and the second and third paths correspond to the subordinate system. While the main system (the first path) is normal, the main system is used to allow brake system 121 to apply autonomous driving control based on a command received from ADK 200. When the main system fails, the subordinate system is used to allow brake system 121 to apply autonomous driving control based on a command received from ADK 200. Specifically, when the main system fails and the subordinate system is normal, the third path is used to allow brake system 121 to apply autonomous driving control based on a command received from ADK 200. Further, when the main and subordinate systems both fail while the vehicle is autonomously driven, brake system 121 applies autonomous deceleration control. The autonomous deceleration control is applied to control the brake device to decelerate the vehicle to control the vehicle. Brake system 121 applies the autonomous deceleration control regardless of whether there is a command received from ADK 200. When the main and subordinate systems both fail while the vehicle is autonomously driven, the autonomous deceleration control is applied even if there still remains a command path from ADK 200 to brake system 121. For example, when the first and second paths both fail, the autonomous deceleration control is applied even if the third path does not fail. The autonomous deceleration control is applied when the first and second paths both fail, and the autonomous deceleration control is also applied when the first and third paths both fail. When one of brake control units 121A and 121B fails and accordingly the subordinate system fails, the other brake control unit that does not fail applies the autonomous deceleration control. Hereinafter, failure of both the main and subordinate systems will be referred to as a "two-system failure".

Brake system 121 is configured such that brake control units 121A and 121B each control the brake device. The brake device is configured to decelerate vehicle 1. The brake device may be a hydraulic disk brake device. The brake device functions as a service brake and is used not only while the vehicle is stationary but also while the vehicle is traveling. The brake device may have a brake hold function. While vehicle 1 is manually driven, brake control unit 121A or 121B controls the brake device in response to a braking operation performed by a user (e.g., a driver). The brake device applies a braking force to a wheel of vehicle 1. For example, while vehicle 1 is traveling, the user can depress a brake pedal to decelerate and thus make vehicle 1 stationary.

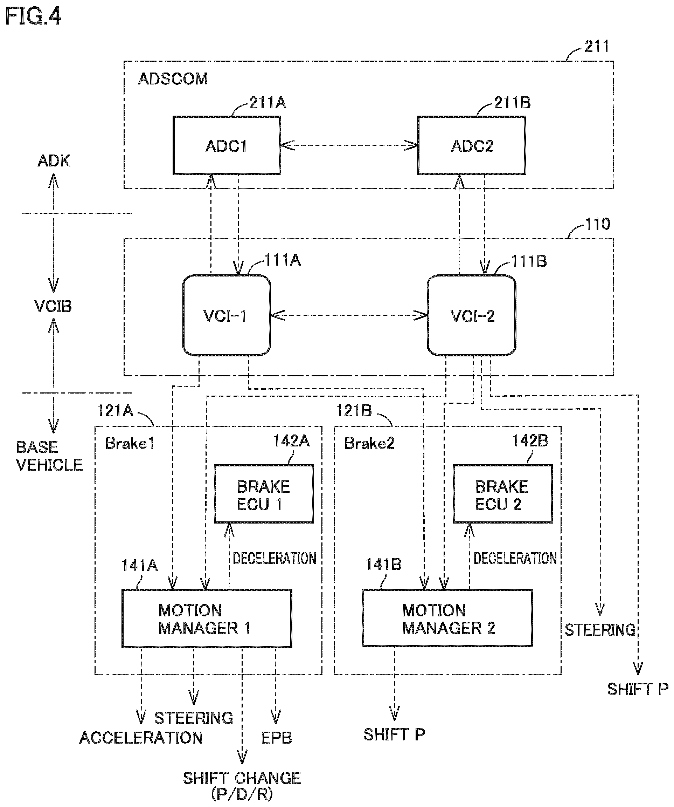

Fig. 4 is a diagram for illustrating an example of a configuration of each of brake control units 121A and 121B. In the example illustrated in Fig. 4, brake control units 121A and 121B include motion managers 141A and 141B, respectively, and brake ECUs 142A and 142B, respectively. These function as a controller. VCI control unit 111A is configured to communicate with VCI control unit 111B, ADC 211A, and motion managers 141A and 141B through communication lines L2, L11, L12, and L31 illustrated in Fig. 3. VCI control unit 111B is configured to communicate with VCI control unit 111A, ADC 211B, and motion managers 141A and 141B through communication lines L2, L21, L22, and L32 illustrated in Fig. 3. Furthermore, VCI control unit 111B is configured to directly communicate with P-Lock device 123B and steering control units 122A and 122B illustrated in Fig. 2. VCI control unit 111B allows steering control to be applied to avoid collision of vehicle 1 while it is travelling, and allows immobilization control to be applied to suppress movement of vehicle 1 while it is stationary on a slope.

VCI control unit 111A requests motion manager 141A to apply autonomous driving control in accordance with a command received from ADC 211A. Motion manager 141A requests control necessary to implement the requested autonomous driving control (e.g., acceleration control, deceleration control, steering control, shift control, or parking control) from a system corresponding to that control. Brake ECU 142A controls the brake device in response to a request received from motion manager 141A. VCI control unit 111A can also request motion manager 141B to apply deceleration control.

VCI control unit 111B requests motion manager 141A to apply autonomous driving control in accordance with a command received from ADC 211B. Furthermore, VCI control unit 111B requests motion manager 141B to apply deceleration control as necessary. For example, when brake control unit 121A fails, VCI control unit 111B may request motion manager 141B to apply deceleration control. Brake ECU 142B controls the brake device in response to a request received from motion manager 141B.

In the present embodiment, a signal (an API signal) defined with an application program interface (API) is used for communication between ADK 200 and VCIB 110. ADK 200 is configured to process a variety of types of signals defined with the API. ADK 200 outputs a variety of types of commands to VCIB 110 in accordance with the API. Hereinafter, the variety of types of commands output from ADK 200 to VCIB 110 will each also be referred to as an "API command". ADK 200 receives a variety of types of signals indicating a state of base vehicle 120 from VCIB 110 in accordance with the API. Hereinafter, the variety of types of signals that ADK 200 receives from VCIB 110 will each also be referred to as an "API status". The API command and the API status both correspond to the API signal.

In the present embodiment, ADK 200 uses API commands described below.

A vehicle mode command is an API command to request a transition from an autonomous mode or an assistive mode to a manual mode. The autonomous mode, the assistive mode and the manual mode will be described hereinafter. A propulsion direction command is an API command to request to switch a shift range (R/D). An acceleration command is an API command indicating acceleration of the vehicle. The acceleration command requests acceleration (+) and deceleration (-) for a direction indicated by a propulsion direction status described hereinafter. A front wheel steering angle command is an API command to request to steer the front wheels of the vehicle. An immobilization command is an API command to request application of or release from immobilization.

Some API commands used in vehicle 1 have been described above. VCIB 110 receives a variety of types of API commands from ADK 200. Upon receiving an API command from ADK 200, VCIB 110 converts the API command into a format for a signal executable by the controller of base vehicle 120. Hereinafter, an API command converted into a format of a signal executable by the controller of base vehicle 120 will also be referred to as an "internal command". Upon receiving an API command from ADK 200, VCIB 110 outputs to base vehicle 120 an internal command corresponding to the API command.

Hereinafter, the API status will be described. ADK 200 understands a state of base vehicle 120 for example through API statuses described below.

A vehicle mode status (hereinafter denoted as "VEMDST") is an API status indicating a state of a vehicle mode. The vehicle mode includes the manual mode, the autonomous mode and the assistive mode. The manual mode is a vehicle mode in which the vehicle is under the control of a user (a human) and the autonomous driving kit is not permitted to intervene (or assist) driving. The assistive mode is a vehicle mode in which the vehicle is under the control of a user (a human) and the autonomous driving kit is permitted to intervene (or assist) driving. The autonomous mode is a vehicle mode in which the vehicle platform (including the base vehicle) is under the control of the autonomous driving kit. Initially (e.g., when the vehicle system is started), the vehicle mode is the manual mode. VEMDST indicates values of "0", "1" and "2" when the current vehicle mode is the manual mode, the autonomous mode, and the assistive mode, respectively. Hereinafter, driving in the manual mode, driving in the assistive mode, and driving in the autonomous mode will be referred to as "manual driving", "assisted autonomous driving" and "fully autonomous driving", respectively. Furthermore, the assisted autonomous driving and the fully autonomous driving will generally be referred to as "autonomous driving".

A propulsion direction status is an API status indicating the current shift range. A moving direction status is an API status indicating a direction in which the vehicle moves. The moving direction status outputs a value of "0" when the vehicle moves forward, a value of "1" when the vehicle moves backward, and a value of "2" (Standstill) when all the wheels (four wheels) indicate a speed of "0" for a predetermined period of time. A vehicle speed status is an API status indicating a speed of the vehicle in its longitudinal direction. The vehicle speed status outputs an absolute value of vehicular speed. An immobilization status is an API status indicating a state of immobilization (e.g., a state of EPB device 123A and a state of P-Lock device 123B).

A main system failure status (hereinafter denoted as "main system ST") indicates whether the main system fails. When the main system does not fail, the main system ST indicates "1", and when the main system fails, the main system ST indicates "0". A subordinate system failure status (hereinafter denoted as "subordinate system ST") indicates whether the subordinate system fails. When the subordinate system does not fail, the subordinate system ST indicates "1", and when the subordinate system fails, the subordinate system ST indicates "0". In the present embodiment, when at least one of the second and third paths fails, the subordinate system ST indicates "0". The main system ST and the subordinate system ST each have an initial value of "1". Hereinafter, the main system ST and the subordinate system ST may be collectively referred to as a "system ST".

An autonomous deceleration fail-safety status (hereinafter referred to as "autonomous deceleration ST") indicates whether autonomous deceleration control is applied when the two-system failure occurs. When autonomous deceleration control while the two-system failure occurs is turned on (or enabled), that is, when the two-system failure occurs and the autonomous deceleration control is applied, the autonomous deceleration ST indicates "1". When the autonomous deceleration control while the two-system failure occurs is turned off (or disabled), that is, when the two-system failure occurs and the autonomous deceleration control is not applied, the autonomous deceleration ST indicates "0". The autonomous deceleration ST has an initial value of "0".

Some API statuses used in vehicle 1 have been described above. VCIB 110 receives values of sensing by a variety of types of sensors and state determination results from base vehicle 120 and outputs to ADK 200 a variety of types of API statuses indicating a state of base vehicle 120. VCIB 110 obtains an API status having a value set to indicate a state of base vehicle 120 and outputs the obtained API status to ADK 200. The variety of types of API statuses are stored in a storage device of VCI control unit 111A and that of VCI control unit 111B, for example, and updated sequentially.

In the present embodiment, a user may request VCIB 110 through HMI 150 to change a vehicle mode. Hereinafter, a request to change the manual mode to the assistive mode or the autonomous mode will be referred to as a "Start Autonomous Driving request". A request to change the assistive mode or the autonomous mode to the manual mode will be referred to as an "End Autonomous Driving request". A request to change the assistive mode to the autonomous mode will be referred to as a "Raise Driving Level request". A request to change the autonomous mode to the assistive mode will be referred to as a "Lower Driving Level request". The Raise Driving Level request and the Lower Driving Level request may be collectively referred to as a "Change Driving Level request".

Hereinafter will be mainly described an example in which vehicle 1 is driven in a variety of types of modes in a manned state (while the vehicle is manned). However, vehicle 1 may be fully autonomously driven and thus operated in an unmanned state.

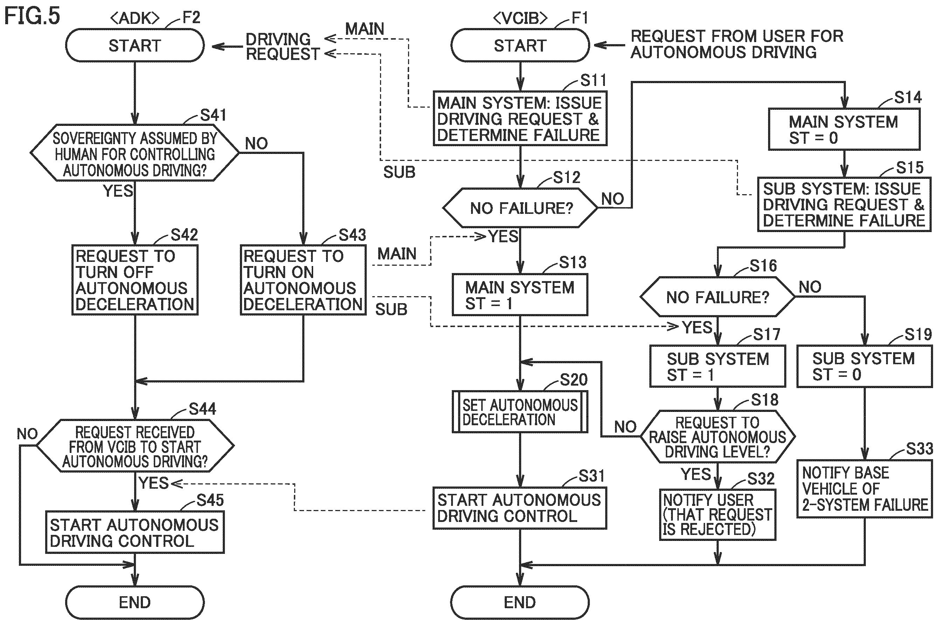

Upon receiving the Start Autonomous Driving request or the Change Driving Level request, VCIB 110 performs a process flow F1 indicated in Fig. 5. Fig. 5 is a flowchart of a process performed when autonomously driving vehicle 1 starts. In the flowchart, "S" means a step.

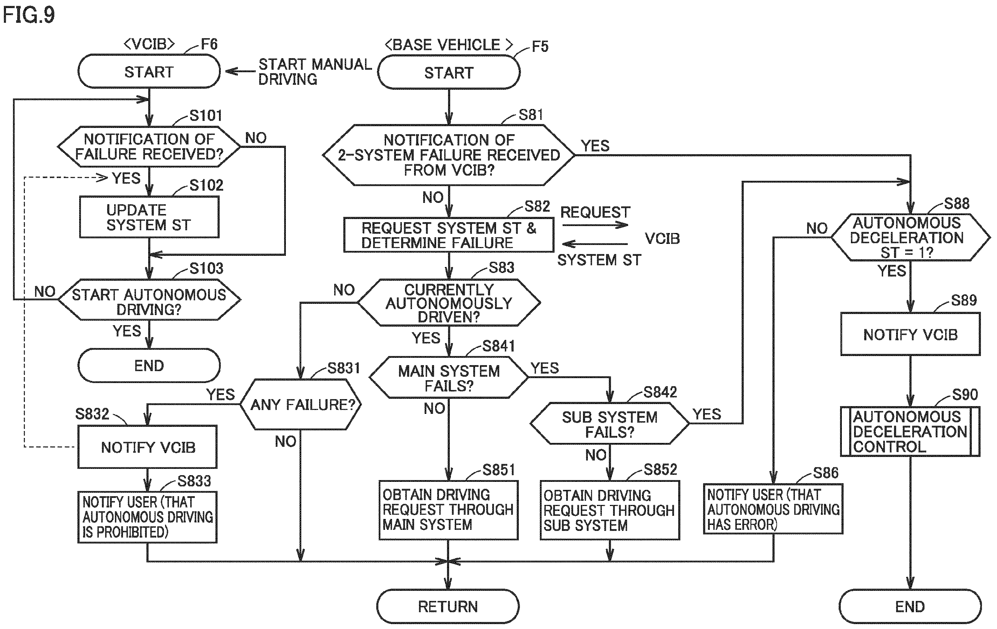

In the process flow F1, in S11, VCIB 110 requests ADK 200 through the main system to start autonomous driving (assisted autonomous driving or fully autonomous driving) requested by the user. Furthermore, VCIB 110 determines whether the main system fails. Subsequently, in S12, VCIB 110 determines whether the main system is normal (or free of failure). Specifically, VCI control unit 111A transmits a first request signal through communication line L11 illustrated in Fig. 3 to ADC 211A to request to start the autonomous driving. VCI control unit 111A may determine that the main system does not fail when a reply to the first request signal (see S42 or S43 described hereinafter) is received from ADC 211A. VCI control unit 111A may determine that the main system fails when a reply is not received from ADC 211A even after a predetermined period of time has elapsed since the first request signal was transmitted. However, when the main system ST currently has a value of "0" in S11, VCIB 110 determines that the main system fails in S12 without transmitting the first request signal. The main system ST can be updated while the vehicle is manually driven (see a process flow F6 indicated in Fig. 9 described hereinafter).

When it is determined that the main system is normal (YES in S12), VCIB 110 sets "1" for the main system ST in S13, and then the control proceeds to S20. S20 et. seq. will be described hereinafter. In contrast, when it is determined that the main system fails (NO in S12), VCIB 110 sets "0" for the main system ST in S14, and then the control proceeds to S15.

In S15, VCIB 110 requests ADK 200 through the subordinate system to start the autonomous driving requested by the user. Furthermore, VCIB 110 determines whether the subordinate system fails. Subsequently, in S16, VCIB 110 determines whether the subordinate system is normal (or free of failure). Specifically, VCI control unit 111B transmits a second request signal through communication line L21 illustrated in Fig. 3 to ADC 211B to request to start the autonomous driving. VCI control unit 111B may determine that the subordinate system does not fail when a reply to the second request signal (see S42 or S43 described hereinafter) is received from ADC 211B. VCI control unit 111B may determine that the subordinate system fails when a reply is not received from ADC 211B even after a predetermined period of time has elapsed since the second request signal was transmitted. However, when the subordinate system ST currently has a value of "0" in S15, VCIB 110 determines that the subordinate system fails in S16 without transmitting the second request signal. The subordinate system ST can be updated while the vehicle is manually driven (see process flow F6 indicated in Fig. 9 described hereinafter).

When it is determined that the subordinate system is normal (YES in S16), VCIB 110 sets "1" for the subordinate system ST in S17, and then the control proceeds to S18. In S18, whether the user requests to raise an autonomous driving level is determined. When VCIB 110 receives the Start Autonomous Driving request or the Raise Driving Level request from the user, a decision of YES is made in S18, and the control proceeds to S32. In S32, VCIB 110 notifies the user that the request is not satisfied. For example, VCIB 110 may cause HMI 150 to display a message indicating that the autonomous driving level cannot be raised due to a system error. In that case, the process flow F1 ends without starting the autonomous driving requested by the user. That is, the request from the user is rejected. In contrast, when VCIB 110 receives the Lower Driving Level request from the user, a decision of NO is made in S18, and the control proceeds to S20. S20 et. seq. will be described hereinafter.

When it is determined that not only the main system but also the subordinate system fails (NO in S16), VCIB 110 sets "0" for the subordinate system ST in S19, and then the control proceeds to S33. In S33, VCIB 110 notifies base vehicle 120 that the two-system failure has occurred. For example, VCI control unit 111A may notify brake control unit 121A or 121B through communication line L12 or L31. Furthermore, VCI control unit 111B may notify brake control unit 121B or 121A through communication line L22 or L32. When the notification of S33 is done, the process flow F1 ends.

ADK 200 starts assisted autonomous driving or fully autonomous driving in response to a request received from VCIB 110. Specifically, when ADK 200 receives the first request signal (S11) or the second request signal (S15) from VCIB 110, the ADK performs a process flow F2.

In the process flow F2, ADK 200 determines in S41 whether the autonomous driving that VCIB 110 requests is autonomous driving in which a human assumes sovereignty for control. Specifically, assisted autonomous driving corresponds to autonomous driving in which a human assumes sovereignty for control. The assisted autonomous driving corresponds for example to autonomous driving of a level 1 or 2 defined by the "SAE J3016" standard. Fully autonomous driving corresponds to autonomous driving in which the autonomous driving kit assumes sovereignty for control. The fully autonomous driving corresponds for example to autonomous driving of a level 4 or 5 defined in the "SAE J3016" standard. When the first or second request signal received by ADK 200 requests assisted autonomous driving, a decision of YES is made in S41, and the control proceeds to S42. In contrast, when the first or second request signal received by ADK 200 requests fully autonomous driving, a decision of NO is made in S41, and the control proceeds to S43.

Note that ADK 200 may be configured to perform autonomous driving of a level 3 defined by the "SAE J3016" standard in response to a request received from VCIB 110. For the autonomous driving of the level 3, ADK 200 may determine in S41 whether the user (e.g., the driver) or the autonomous driving kit has sovereignty for control based on details of control for that autonomous driving.

In S42, ADK 200 requests VCIB 110 to turn off autonomous deceleration (i.e., disable the autonomous deceleration control when the two-system failure occurs). For example, when ADC 211A receives the first request signal, ADC 211A transmits a third request signal through the main system to VCI control unit 111A to request to turn off autonomous deceleration. As a result, a decision of YES is made in S12. Furthermore, when ADC 211B receives the second request signal, ADC 211B transmits the third request signal through the subordinate system to VCI control unit 111B to request to turn off autonomous deceleration. As a result, a decision of YES is made in S16.

In S43, ADK 200 requests VCIB 110 to turn on autonomous deceleration (that is, to enable the autonomous deceleration control when the two-system failure occurs). For example, when ADC 211A receives the first request signal, ADC 211A transmits a fourth request signal through the main system to VCI control unit 111A to request to turn on autonomous deceleration. As a result, a decision of YES is made in S12. Furthermore, when ADC 211B receives the second request signal, ADC 211B transmits the fourth request signal through the subordinate system to VCI control unit 111B to request to turn on autonomous deceleration. As a result, a decision of YES is made in S16.

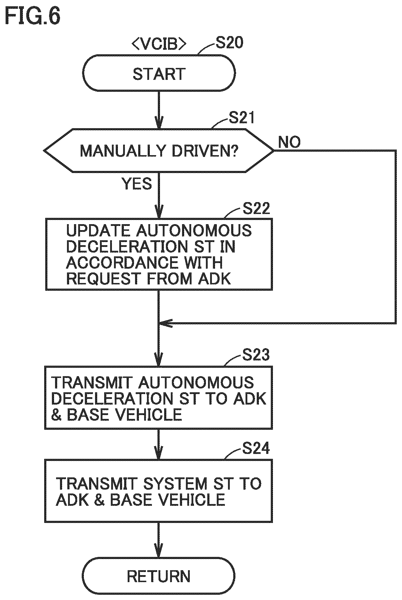

VCIB 110 performs S20 based on the third or fourth request signal received from ADK 200. Specifically, VCIB 110 performs a process flow indicated in Fig. 6 described below. Fig. 6 is a flowchart showing details of S20.

Referring to Fig. 6, in S21, VCIB 110 determines whether vehicle 1 is currently manually driven. When VCIB 110 receives the Start Autonomous Driving request, autonomous driving has not yet been started, and vehicle 1 is thus currently manually driven. In that case, a decision of YES is made in S21, and the control proceeds to S22. In S22, VCIB 110 updates the autonomous deceleration ST in accordance with a request received from ADK 200. Specifically, when VCIB 110 receives the third request signal from ADK 200, VCIB 110 sets "0" for the autonomous deceleration ST. When VCIB 110 receives the fourth request signal from ADK 200, VCIB 110 sets "1" for the autonomous deceleration ST. Thus, VCIB 110 is configured to switch the autonomous deceleration control to be enabled/disabled based on a request received from ADK 200. When the autonomous deceleration ST is updated in S22, the control proceeds to S23.

Furthermore, when VCIB 110 receives the Change Driving Level request, vehicle 1 is currently autonomously driven. In that case, a decision of NO is made in S21, and the control proceeds to S23 without performing S22. Thus, VCIB 110 is configured to prohibit switching the autonomous deceleration control to be enabled/disabled while the vehicle is autonomously driven.

In S23, VCIB 110 transmits the autonomous deceleration ST to ADK 200 and brake system 121 through a communication line that does not fail among communication lines L11, L12, L21, L22, L31, and L32 shown in Fig. 3.

Subsequently, in S24, VCIB 110 transmits the system ST (the main system ST and the subordinate system ST) to ADK 200 and brake system 121 through a communication line that does not fail among communication lines L11, L12, L21, L22, L31, and L32 (Fig. 3).

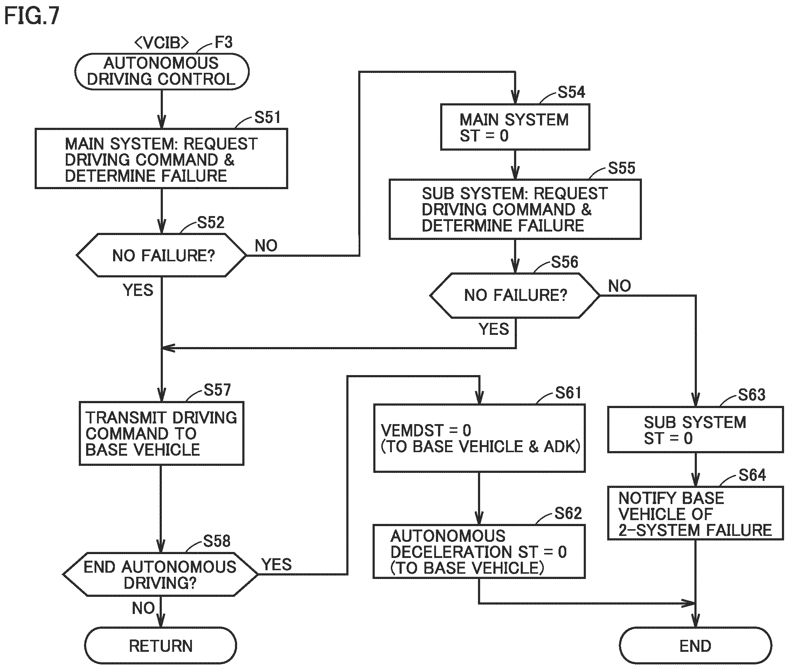

When the step of S24 indicated in Fig. 6 is performed, S20 in the process flow F1 (Fig. 5) ends, and the control proceeds to S31. Referring again to Fig. 5, in S31, VCIB 110 sets VEMDST according to the autonomous driving requested by the user, requests ADK 200 to start the autonomous driving requested by the user, and starts the autonomous driving control indicated in Fig. 7 described hereinafter. Specifically, when the user requests assisted autonomous driving, VCIB 110 changes the value of VEMDST from "0" or "1" to "2", and transmits the changed VEMDST to ADK 200 and base vehicle 120. When the user requests fully autonomous driving, VCIB 110 changes the value of VEMDST from "0" or "2" to "1", and transmits the changed VEMDST to ADK 200 and base vehicle 120. By transmitting the changed VEMDST to ADK 200, VCIB 110 requests ADK 200 to start the autonomous driving requested by the user (assisted autonomous driving or fully autonomous driving).

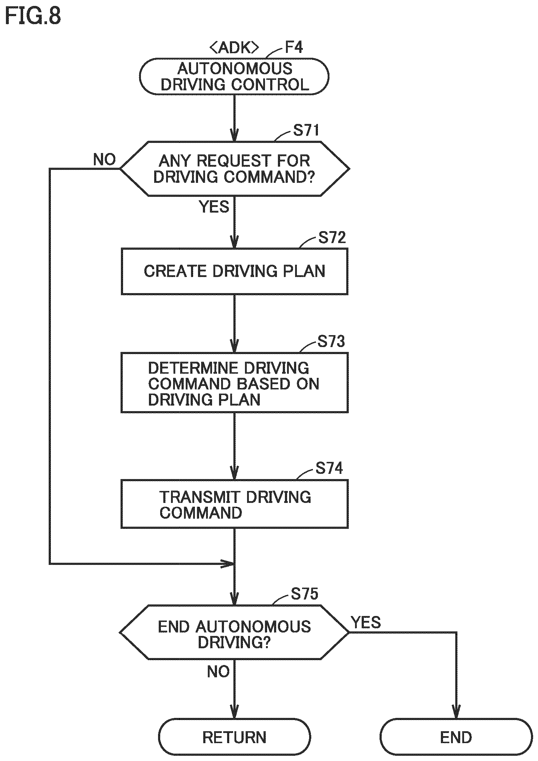

After ADK 200 transmits the third or fourth request signal in S42 or S43 described above, the ADK determines in S44 whether a request is received from VCIB 110 to start autonomous driving (S31). When ADK 200 receives a request from VCIB 110 to start autonomous driving, a decision of YES is made in S44, and the control proceeds to S45. When VCIB 110 performs the step of S31 in the process flow F1, a decision of YES is made in S44. In S45, ADK 200 starts control for the autonomous driving requested from VCIB 110 (the autonomous driving requested by the user). Specifically, ADK 200 starts the autonomous driving control indicated in Fig. 8, which will be described hereinafter. In contrast, when the third or fourth request signal is transmitted and thereafter a predetermined period of time elapses, and despite that ADK 200 still does not receive a request from VCIB 110 to start autonomous driving, a decision of NO is made in S44. For example, when VCIB 110 does not perform the step of S31 and the process flow F1 ends, a decision of NO is made in S44. In that case, the process flow F2 ends without performing S45.

Fig. 7 is a flowchart of a process for autonomous driving control applied by VCIB 110. VCIB 110 starts a process flow F3 indicated in Fig. 7 by the step of S31 in Fig. 5. When an autonomous driving level is changed by the step of S31 in Fig. 5, VCIB 110 ends the currently applied autonomous driving control (process flow F3), and starts new control for requested autonomous driving (process flow F3).

Referring to Fig. 7, in the process flow F3, VCIB 110 requests a driving command from ADK 200 through the main system in S51 for autonomous driving. Furthermore, VCIB 110 determines whether the main system fails. Subsequently, in S52, VCIB 110 determines whether the main system is normal (or free of failure). Specifically, VCI control unit 111A transmits through communication line L11 illustrated in Fig. 3 to ADC 211A a fifth request signal for requesting a driving command for autonomous driving together with a variety of types of API statuses indicating a state of vehicle 1. The transmitted API statuses include VEMDST. VCI control unit 111A may determine that the main system does not fail when a reply to the fifth request signal (see S74 in Fig. 8 described hereinafter) is received from ADC 211A. When the fifth request signal is transmitted and thereafter a predetermined period of time elapses, and despite that a reply is not received from ADC 211A, VCI control unit 111A may determine that the main system fails. However, when the main system ST currently has a value of "0" in S51, VCIB 110 determines that the main system fails in S52 without transmitting the fifth request signal.

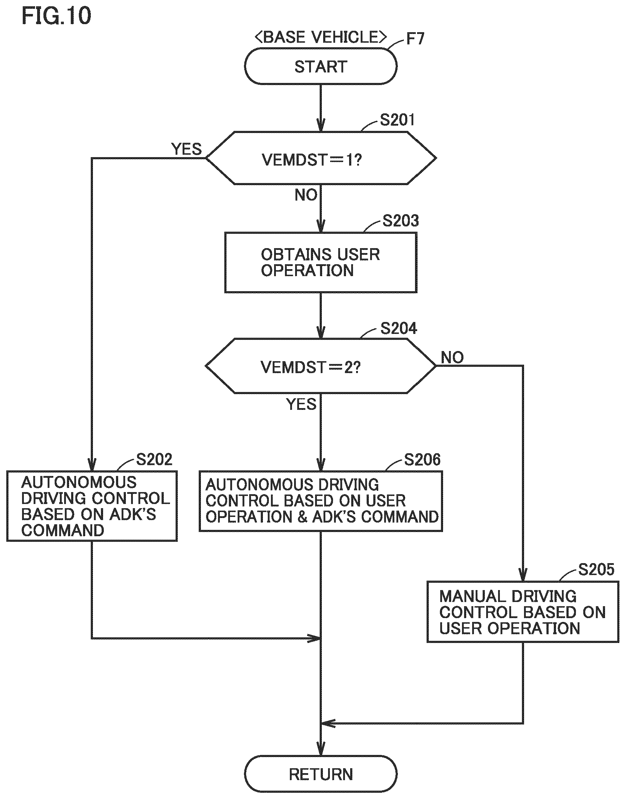

When VCIB 110 receives the driving command from ADK 200 through the main system, it is determined that the main system is normal (YES in S52), and the control proceeds to S57. In S57, VCIB 110 transmits to base vehicle 120 an internal command corresponding to the received driving command (an API command for autonomous driving). Thus, base vehicle 120 applies the autonomous driving control based on the command received from ADK 200 (see Fig. 10). In the present embodiment, when the main system (the first path) does not fail, VCI control unit 111A receives a driving request for example including a command for deceleration control from ADC 211A through the main system, and transmits the driving request to brake control unit 121A. Thus, brake control unit 121A controls the brake device based on the driving request received from ADC 211A through the main system. When the step of S57 is performed, the control proceeds to S58.

In contrast, when it is determined that the main system fails (NO in S52), VCIB 110 sets "0" for the main system ST in S54, and then the control proceeds to S55. In S55, VCIB 110 requests the driving command through the subordinate system from ADK 200 for autonomous driving. Furthermore, VCIB 110 determines whether the subordinate system fails. Subsequently, in S56, VCIB 110 determines whether the subordinate system is normal (or free of failure). Specifically, VCI control unit 111B transmits through communication line L21 illustrated in Fig. 3 to ADC 211B a sixth request signal for requesting a driving command for autonomous driving together with a variety of types of API statuses indicating a state of vehicle 1. The transmitted API statuses include VEMDST. VCI control unit 111B may determine that the subordinate system does not fail when a reply to the sixth request signal (see S74 in Fig. 8 described hereinafter) is received from ADC 211B. When the sixth request signal is transmitted and thereafter a predetermined period of time elapses, and despite that a reply is not received from ADC 211B, VCI control unit 111B may determine that the subordinate system fails. However, when the subordinate system ST currently has a value of "0" in S55, VCIB 110 determines that the subordinate system fails in S56 without transmitting the sixth request signal.

When VCIB 110 receives the driving command from ADK 200 through the subordinate system, it is determined that the subordinate system is normal (YES in S56), and the control proceeds to S57. In S57, VCIB 110 transmits to base vehicle 120 an internal command corresponding to the received driving command (an API command for autonomous driving). Thus, base vehicle 120 applies the autonomous driving control based on the command received from ADK 200 (see Fig. 10). In the present embodiment, when the main system (the first path) fails and the subordinate system (the second and third paths) does not fail, VCI control unit 111B receives a driving request for example including a command for deceleration control from ADC 211B through the third path, and transmits the driving request to brake control unit 121A through the third path. Thus, brake control unit 121A controls the brake device based on the driving request received from ADC 211B through the third path. Even when the main system fails, brake control unit 121A can continue autonomous driving control (or control the brake device) based on the driving request received from ADK 200. When the step of S57 is performed, the control proceeds to S58.

In S58, VCIB 110 determines whether to end the autonomous driving. For example, when VCIB 110 receives the End Autonomous Driving request, a decision of YES is made in S58, and the control proceeds to S61. In S61, VCIB 110 changes the value of VEMDST from "1" or "2" to "0", and transmits the changed VEMDST to ADK 200 and base vehicle 120. VCIB 110 transmits the changed VEMDST to ADK 200 to request ADK 200 to end the autonomous driving requested by the user. After that, VCIB 110 sets "0" for the autonomous deceleration ST in S62, and subsequently transmits the autonomous deceleration ST to base vehicle 120. When the step of S62 is performed, the process flow F3 ends. In contrast, when VCIB 110 does not receive the End Autonomous Driving request, a decision of NO is made in S58, and the control returns to the initial step (S51). Thus, the autonomous driving control is continued.

When it is determined that not only the main system but also the subordinate system fails (NO in S56), VCIB 110 performs the steps of S63 and S64. The steps of S63 and S64 are the same as the steps of S19 and S33, respectively, indicated in Fig. 5. When the step of S64 is performed, the process flow F3 ends.

Fig. 8 is a flowchart of a process for autonomous driving control applied by ADK 200. ADK 200 starts a process flow F4 indicated in Fig. 8 by the step of S45 in Fig. 5. When an autonomous driving level is changed by the step of S45 in Fig. 5, ADK 200 ends the currently applied autonomous driving control (process flow F4) and starts new control for requested autonomous driving (process flow F4).

Referring to Fig. 8, in the process flow F4, ADK 200 determines in S71 whether a driving command is requested from VCIB 110. When ADK 200 receives the above-described fifth or sixth request signal, a decision of YES is made in S71, and the control proceeds to S72. In contrast, when ADK 200 receives neither the fifth request signal nor the sixth request signal, a decision of NO is made in S71, and the control proceeds to S75.

In S72, ADK 200 recognizes a vehicle mode of vehicle 1 based on VEMDST and creates a driving plan for the vehicle mode (the assistive mode or the autonomous mode). More specifically, ADK 200 creates a driving plan for autonomous driving, based on a result of sensing by a variety of types of sensors (e.g., environmental information and pose information) and an API status obtained from VCIB 110. The driving plan is data indicating a behavior of vehicle 1 targeted for a predetermined period of time. ADK 200 may calculate a behavior (a pose, etc.) of vehicle 1 and create a driving plan suitable for a state of vehicle 1 and an external environment. Subsequently, in S73, ADK 200 determines an API command (a driving command, such as a propulsion direction command, an acceleration command, a front wheel steering command, and an immobilization command) for applying control requested by the created driving plan (e.g., at least one of: acceleration control; deceleration control; steering control; controlling the vehicle to be stationary; and parking control). The driving command corresponds to a driving request from ADK 200 to the vehicle system (a system of base vehicle 120). ADK 200 may calculate a physical quantity requested by the driving plan for control (such as acceleration, a tire turning angle, etc.), and determine a driving command based on the calculation result. Subsequently, in S74, ADK 200 transmits the determined driving command to VCIB 110.

When ADC 211A receives the fifth request signal from VCI control unit 111A, ADC 211A performs the steps of S72 to S74. ADC 211A transmits the driving command determined as described above to VCI control unit 111A through the main system. As a result, a decision of YES is made in S52 in Fig. 7. Furthermore, when ADC 211B receives the sixth request signal from VCI control unit 111B, ADC 211B performs the steps of S72 to S74. ADC 211B transmits the driving command determined as described above to VCI control unit 111B through the subordinate system. As a result, a decision of YES is made in S56 in Fig. 7. When the step of S74 is performed, the control proceeds to S75.

In S75, ADK 200 determines whether to end the autonomous driving. For example, when ADK 200 receives a request from VCIB 110 to end the autonomous driving (S61), a decision of YES is made in S75, and the process flow F4 ends. In contrast, when ADK 200 does not receive the request from VCIB 110 to end the autonomous driving (S61), a decision of NO is made in S75, and the control returns to the initial step (S71). Thus, the autonomous driving control is continued.

Fig. 9 is a diagram for illustrating a process performed by base vehicle 120. Base vehicle 120 repeats a process flow F5 while the autonomous deceleration control (S90) is not applied. The process flow F5 is performed by any of a plurality of controllers that base vehicle 120 comprises (e.g., integrated control manager 130 and each system's controller shown in Figs. 1 to 4).

Referring to Fig. 9, in the process flow F5, base vehicle 120 determines in S81 whether it has received notification of a two-system failure (S33 in Fig. 5 or S64 in Fig. 7) from VCIB 110. When base vehicle 120 receives the notification of the two-system failure (YES in S81), the control proceeds to S88. In contrast, when base vehicle 120 does not receive the notification of the two-system failure (NO in S81), the control proceeds to S82.

In S82, base vehicle 120 requests the system ST (the main system ST and the subordinate system ST) from VCIB 110. Furthermore, base vehicle 120 determines whether the main and subordinate systems fail.

Specifically, brake control unit 121A requests the system ST from VCI control units 111A and 111B through communication lines L12 and L32, respectively, illustrated in Fig. 3. When brake control unit 121A receives the system ST from each of VCI control units 111A and 111B, the brake control unit determines that communication lines L12 and L32 do not fail. When brake control unit 121A does not receive the system ST from at least one of VCI control units 111A and 111B, the brake control unit determines that a corresponding path (at least one of communication lines L12 and L32) fails.

Furthermore, brake control unit 121B requests the system ST from VCI control units 111A and 111B through communication lines L31 and L22, respectively, shown in Fig. 3. When brake control unit 121B receives the system ST from each of VCI control units 111A and 111B, the brake control unit determines that communication lines L31 and L22 do not fail. When brake control unit 121B does not receive the system ST from at least one of VCI control units 111A and 111B, the brake control unit determines that a corresponding path (at least one of communication lines L31 and L22) fails.

When brake control unit 121A or 121B receives the system ST from VCIB 110, brake control unit 121A or 121B determines whether the main and subordinate systems fail based on the received system ST. For example, when communication line L11 fails, the main system ST indicates "0" (S14 in Fig. 5 or S54 in Fig. 7). When communication line L21 fails, the subordinate system ST indicates "0" (S19 in Fig. 5 or S63 in Fig. 7).

In the present embodiment, VCI control unit 111A determines whether communication between ADC 211A and VCI control unit 111A fails (S12 in Fig. 5), and the VCI control unit outputs a result of the determination (the main system ST) to base vehicle 120 in response to a request received from base vehicle 120 (S82). Furthermore, VCI control unit 111B determines whether communication between ADC 211B and VCI control unit 111B fails (S16 in Fig. 5), and the VCI control unit outputs a result of the determination (the subordinate system ST) to base vehicle 120 in response to a request received from base vehicle 120 (S82). This configuration helps base vehicle 120 to sense a failure for each of the first and second paths. Note that the above embodiment is not exclusive, and VCI control units 111A and 111B may each spontaneously transmit the system ST to base vehicle 120.

Subsequently, in S83, base vehicle 120 recognizes the vehicle mode of vehicle 1 based on VEMDST, and determines whether vehicle 1 is currently autonomously driven. When VEMDST indicates "0", a decision of NO is made in S83, and the control proceeds to S831. When VEMDST indicates "1" or "2", a decision of YES is made in S83, and the control proceeds to S841.

In S831, base vehicle 120 determines whether it is determined in S82 that communication between VCIB 110 and base vehicle 120 fails. For example, when it is determined that at least one of communication lines L12, L22, L31, and L32 fails, a decision of YES is made in S831, and the control proceeds to S832. In contrast, when it is determined that none of communication lines L12, L22, L31, and L32 fails, a decision of NO is made in S831, and the control returns to the initial step (S81).

In S832, base vehicle 120 notifies VCIB 110 of the result of the determination regarding failure in S82. Specifically, base vehicle 120 transmits failure information indicating which of communication lines L12, L22, L31, and L32 fails to VCIB 110 through a communication line which does not fail. Subsequently, in S833, base vehicle 120 notifies the user that autonomous driving is prohibited. For example, base vehicle 120 may cause HMI 150 to display a message indicating that autonomous driving cannot be performed due to a system error. When the step of S833 is performed, the control returns to S81.

While vehicle 1 is manually driven, VCIB 110 repeats the steps of S101 to S103 indicated in Fig. 9. Specifically, when manually driving vehicle 1 is started, VCIB 110 starts the process flow F6 indicated in Fig. 9. In the process flow F6, VCIB 110 determines in S101 whether the failure information (S832) is received from base vehicle 120. When VCIB 110 receives the failure information (YES in S101), VCIB 110 updates the system ST based on the received failure information in S102. For example, when communication line L12 fails, "0" is set for the main system ST. When at least one of communication lines L22 and L32 fails, "0" is set for the subordinate system ST.

Subsequently, in S103, VCIB 110 determines whether autonomous driving is started. When the manual driving is continued (NO in S103), the control returns to S101. In contrast, for example when autonomous driving is started by the step of S31 in Fig. 5 (YES in S103), the process flow F6 ends.

In S841, base vehicle 120 determines whether it is determined in S82 that the main system fails. For example, a failure of at least one of communication lines L11 and L12 means a failure of the main system. When it is determined that the main system does not fail (NO in S841), base vehicle 120 in S851 receives a driving request (see S57 in Fig. 7 and S74 in Fig. 8) from ADK 200 through the main system and stores the driving request together with its reception time in a storage device. Thereafter, the control returns to S81.

In contrast, when it is determined that the main system fails (YES in S841), base vehicle 120 determines in S842 whether it is determined in S82 that the subordinate system fails. For example, a failure of at least one of communication lines L21, L22 and L32 means a failure of the subordinate system. When it is determined that the subordinate system does not fail (NO in S842), base vehicle 120 in S852 receives a driving request (see S57 in Fig. 7 and S74 in Fig. 8) from ADK 200 through the subordinate system and stores the driving request together with its reception time in the storage device. Thereafter, the control returns to S81.

In the present embodiment, base vehicle 120 follows a process flow F7 indicated in Fig. 10 described hereinafter to apply autonomous driving control based on a command obtained in S851 or S852. Fig. 10 is a flowchart of a process for driving control applied by base vehicle 120. Base vehicle 120 repeats the process flow F7 indicated in Fig. 10 in parallel with the process flow F5 indicated in Fig. 9.

Referring to Fig. 10, in the process flow F7, base vehicle 120 determines whether VEMDST indicates "1" in S201. When VEMDST indicates "1" (YES in S201), base vehicle 120 applies autonomous driving control in S202 based on the driving request obtained in S851 or S852 in Fig. 9. This fully autonomously drives vehicle 1. For example, when the driving request includes a command for deceleration control, brake system 121 controls the brake device (Fig. 3) based on a command received from ADK 200. ADK 200 assumes sovereignty over controlling this autonomous driving. When the step of S202 is performed, the control returns to the initial step (S201).

When VEMDST does not indicate "1" (NO in S201), base vehicle 120 obtains a user operation in S203 for driving vehicle 1. Specifically, base vehicle 120 obtains an amount of operating a variety of types of operation units (amounts of operating an accelerator pedal, braking, steering, etc.) and a changing operation (a shift change or the like) for manually driving vehicle 1. Subsequently, in S204, base vehicle 120 determines whether VEMDST indicates "2". When VEMDST indicates "0" (NO in S204), base vehicle 120 applies manual driving control in S205 based on the user operation obtained in S203. For example, the vehicle drive device, the brake device, the steering device, the shift device, etc. are controlled in accordance with the user operation. Vehicle 1 is thus manually driven. When the step of S205 is performed, the control returns to S201.

When VEMDST indicates "2" (YES in S204), base vehicle 120 applies autonomous driving control in S206 based on the user operation obtained in S203 and the driving request obtained in S851 or S852 in Fig. 9. This autonomously drives vehicle 1, as assisted. The user (a human) assumes sovereignty over controlling this autonomous driving. A command from ADK 200 is handled as assisting a user operation. When the step of S206 is performed, the control returns to S201.

Referring again to Fig. 9, when it is determined that not only the main system but also the subordinate system fails (YES in S842), the control proceeds to S88. Thus, the step of S88 is performed when a two-system failure occurs. In S88, base vehicle 120 determines whether the autonomous deceleration ST indicates "1". When the autonomous deceleration ST indicates "0" (NO in S88), the control proceeds to S86. In S86, base vehicle 120 notifies the user that the autonomous driving system has an error. For example, base vehicle 120 may cause HMI 150 to display a message notifying the user that the autonomous driving system has the error.

When the autonomous deceleration ST indicates "1" (YES in S88), the control proceeds to S89. The fact that the autonomous deceleration ST indicates "1" means that the autonomous deceleration control is enabled. Base vehicle 120 applies the autonomous deceleration control (S90) only when the autonomous deceleration control is enabled. In the present embodiment, when autonomous driving ends, the autonomous deceleration ST becomes "0" (S62 in Fig. 7). Furthermore, the autonomous deceleration ST is changed in response to a request received from ADK 200 only while vehicle 1 is manually driven (S22 in Fig. 6). Furthermore, ADK 200 requests to turn on autonomous deceleration only when starting fully autonomous driving (S43 in Fig. 5). Therefore, the fact that the autonomous deceleration ST indicates "1" means that vehicle 1 is currently fully autonomously driven. When the user (e.g., the driver) assumes sovereignty for control, and the two-system failure occurs, the user can continue driving vehicle 1. This suppresses movement of vehicle 1 unintended by the user.

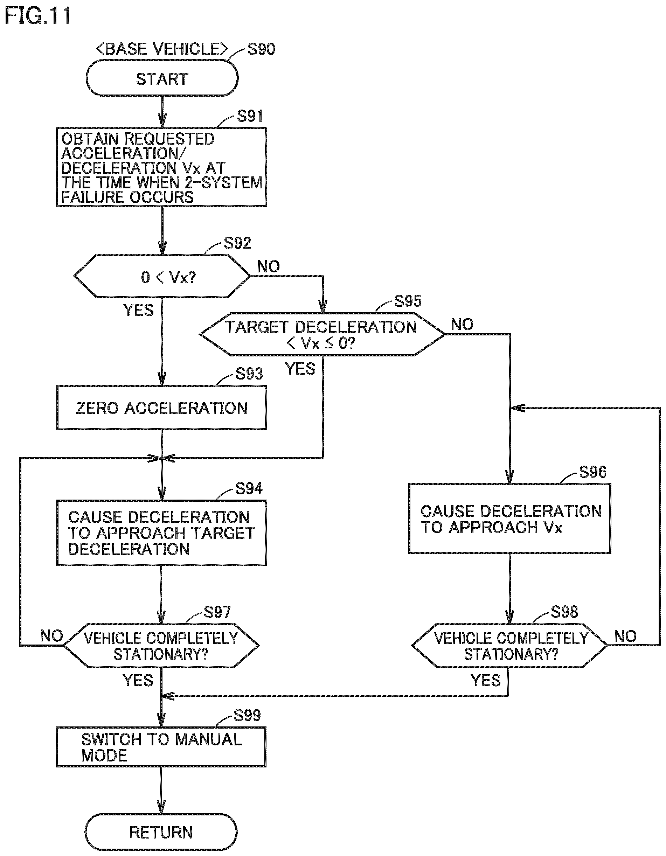

After base vehicle 120 notifies VCIB 110 in S89 of starting autonomous deceleration control, the base vehicle starts the autonomous deceleration control in S90. Fig. 11 is a flowchart showing details of S90.

Referring to Fig. 11, in S91, base vehicle 120 obtains a requested acceleration/deceleration (hereinafter denoted to as "Vx") that is requested from ADK 200 when a two-system failure occurs. Vx is indicated by an internal command corresponding to the latest acceleration command received by base vehicle 120 from VCIB 110. Vx indicates a positive value (+) when acceleration is requested, and indicates a negative value (-) when deceleration is requested.

Subsequently, in S92, base vehicle 120 determines whether Vx is larger than 0. Vx larger than 0 means that it is determined that the main and subordinate systems both fail when ADK 200 transmits an acceleration request requesting that vehicle 1 be accelerated. When Vx is larger than 0 (YES in S92), base vehicle 120 controls the vehicle drive device (Fig. 2) to zero acceleration of vehicle 1 in S93. Vehicle 1 no longer receives propulsive force imparted to a wheel thereof. Subsequently, in S94, brake system 121 (Fig. 2) controls the brake device so that deceleration for vehicle 1 approaches a predetermined deceleration (hereinafter referred to as a "target deceleration"). The brake device is controlled in S94 by brake control unit 121A. However, when brake control unit 121A fails, brake control unit 121B instead controls the brake device. For the target deceleration, for example, a value conforming to traffic rules is set. Base vehicle 120 may cause the deceleration of vehicle 1 to approach the target deceleration at a predetermined rate of change or less so that vehicle 1 is not decelerated at an excessively large rate of change. This suppresses load shifting caused by rapid deceleration. When the deceleration of vehicle 1 reaches the target deceleration, base vehicle 120 maintains the deceleration of vehicle 1 at the target deceleration.

When Vx is equal to or smaller than 0 (NO in S92), base vehicle 120 determines whether Vx is larger than the target deceleration (a negative value) in S95. When Vx is larger than the target deceleration and equal to or smaller than 0 (YES in S95), the control proceeds to S94 without performing S93. Base vehicle 120 causes the deceleration of vehicle 1 to approach the target deceleration by the step of S94. In contrast, when Vx is equal to or smaller than the target deceleration (NO in S95), brake system 121 controls the brake device so that the deceleration of vehicle 1 approaches Vx in S96. The brake device is controlled in S96 by brake control unit 121A. However, when brake control unit 121A fails, brake control unit 121B instead controls the brake device. When the deceleration of vehicle 1 reaches Vx, base vehicle 120 maintains the deceleration of vehicle 1 at Vx. As described above, when it is determined that the main and subordinate systems both fail while ADK 200 transmits a deceleration request to request to decelerate vehicle 1, brake system 121 controls the brake device so that the deceleration of vehicle 1 approaches the larger one of deceleration requested by a deceleration request (Vx) and a predetermined deceleration (a target deceleration). For deceleration, Vx having a smaller value (or increasing negatively) indicates larger deceleration.

When the step of S94 is performed, the control proceeds to S97. When the step of S96 is performed, the control proceeds to S98. In S97 and S98, base vehicle 120 determines whether vehicle 1 has a stationary status. If a decision of NO is made in S97, the control returns to S94. Then, the steps of S94 and S97 are repeated until vehicle 1 has the stationary status. If a decision of NO is made in S98, the control returns to S96. Then, the steps of S96 and S98 are repeated until vehicle 1 has the stationary status. As described above, base vehicle 120 starts the autonomous deceleration control by any of the steps of S93, S94 and S96, and while the autonomous deceleration control is applied, the base vehicle does not obtain a new command from ADK 200, and until vehicle 1 is stationary, the base vehicle continues the autonomous deceleration control (S94 or S96). Vehicle 1 is steered as controlled, as desired, while the autonomous deceleration control is applied. Base vehicle 120 may, for example, remove torque for steering to return a steering angle to the midpoint.

Once vehicle 1 is stationary by the autonomous deceleration control (YES in S97 or S98), the control proceeds to S99. In S99, base vehicle 120 requests VCIB 110 to switch to the manual mode. By this request, VCIB 110 recognizes that the autonomous deceleration control ends. In response to the request received from base vehicle 120, VCIB 110 sets the current vehicle mode of vehicle 1 to the manual mode and sets "0" for VEMDST. When the step of S99 is performed, S90 in the process flow F5 indicated in Fig. 9 ends, and the process flow F5 ends.

As has been described above, in the present embodiment, VP 100 corresponds to an example of a "vehicle allowing an autonomous driving kit to be mounted thereto" according to the present disclosure. VP 100 includes VCIB 110 and base vehicle 120. A system incorporated in base vehicle 120 corresponds to an example of a "vehicle system" according to the present disclosure. VP 100 performs the processes indicated in Figs. 5-7 and 9-11. ADK 200 attached to VP 100 performs the process flows F2 and F4 (Figs. 5 and 8). In the present embodiment, each process is performed by one or more processors executing a program stored in one or more memories. Note, however, that these processes may be performed without using software and instead by hardware (e.g., electronic circuitry) alone.

When only one of the plurality of paths fails while vehicle 1 is autonomously driven, base vehicle 120 continues the autonomous driving based on a command received from ADK 200 through a path other than the failed path (see Fig. 7). When the first and second paths both fail while the vehicle 1 is autonomously driven, base vehicle 120 applies autonomous deceleration control (S90 in Fig. 9). Such control co-establishes stability of autonomous driving control based on a command received from ADK 200 and appropriate fail-safety for the autonomous driving control.

VCIB 110 may obtain specification information of ADK 200 from ADK 200 attached to VP 100. The user may input the specification information of ADK 200 to VCIB 110 through HMI 150 or 218. The specification information for example indicates a type of autonomous driving that ADK 200 can apply. VCIB 110 may set VEMDST based on the specification information obtained from ADK 200 or the user. VCIB 110 may be configured to avoid setting for VEMDST a value corresponding to a type of autonomous driving that ADK 200 cannot apply.

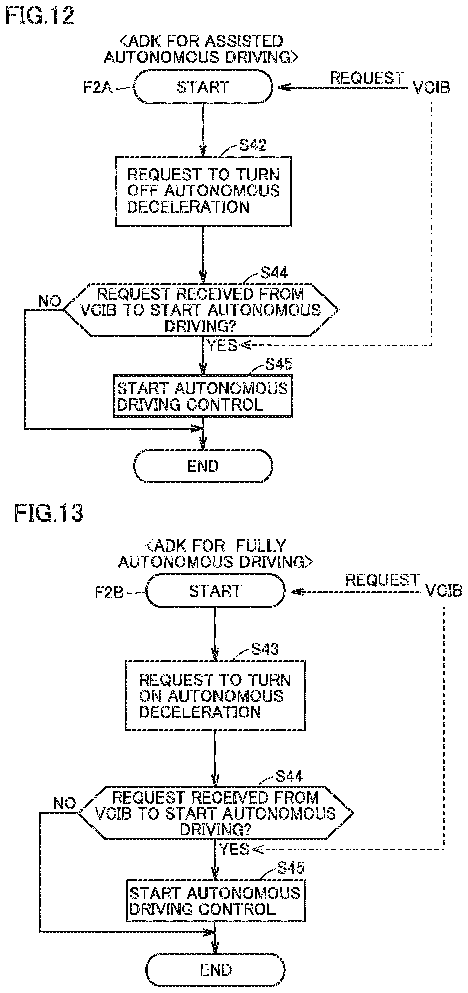

Fig. 12 is a flowchart of a first variation of the process flow F2 indicated in Fig. 5. In the variation indicated in Fig. 12, ADK 200 performs a process flow F2A instead of the process flow F2. Furthermore, among assisted autonomous driving and fully autonomous driving, ADK 200 is configured to be capable of only performing assisted autonomous driving. The process flow F2A is the same as the process flow F2 except that S41 and S43 (Fig. 5) are removed. In S42, ADK 200 requests VCIB 110 to turn off autonomous deceleration. Therefore, at S22 in Fig. 6, "0" is set for the autonomous deceleration ST. Furthermore, VCIB 110 sets "0" or "2" for VEMDST based on the specification information of ADK 200 and does not set "1" for VEMDST. Therefore, by the process flow F7 indicated in Fig. 10, manual driving (S205) or assisted autonomous driving (S206) is appropriately performed.

Fig. 13 is a flowchart of a second variation of the process flow F2 indicated in Fig. 5. In the variation indicated in Fig. 13, ADK 200 performs a process flow F2B instead of the process flow F2. Furthermore, among assisted autonomous driving and fully autonomous driving, ADK 200 is configured to be capable of only performing fully autonomous driving. The process flow F2B is the same as the process flow F2 except that S41 and S42 (Fig. 5) are removed. In S43, ADK 200 requests VCIB 110 to turn on autonomous deceleration. Therefore, at S22 in Fig. 6, "1" is set for the autonomous deceleration ST. Furthermore, VCIB 110 sets "0" or "1" for VEMDST based on the specification information of ADK 200 and does not set "2" for VEMDST. Therefore, by the process flow F7 indicated in Fig. 10, manual driving (S205) or fully autonomous driving (S202) is appropriately performed.

When an autonomous driving kit developed separately from a vehicle (VP 100) is attached to the vehicle, the autonomous driving kit does not necessarily have a function as expected by the manufacturer of the vehicle. The vehicle (VP 100) can obtain specification information of a variety of types of autonomous driving kits, and thus use the variety of types of autonomous driving kits to perform autonomous driving, as appropriate.

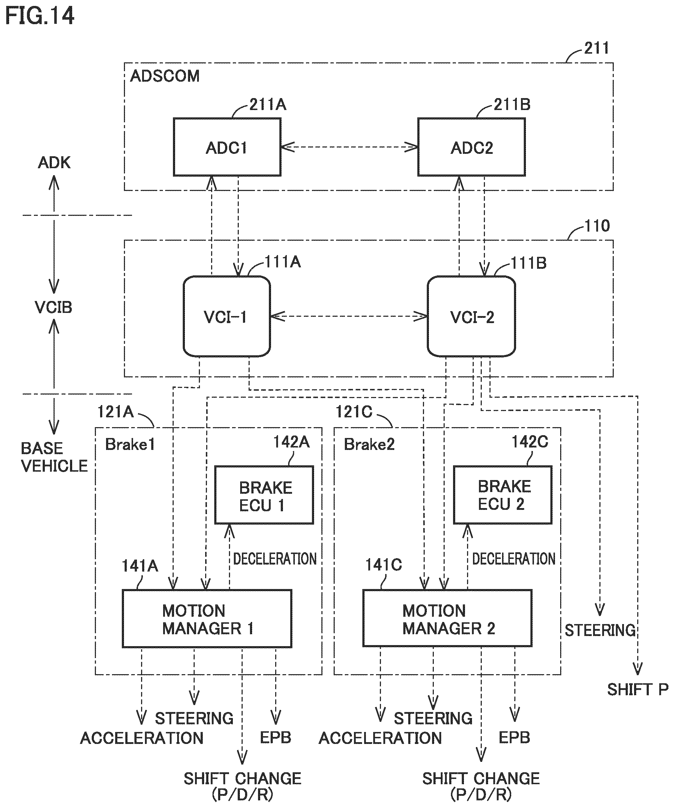

It is not essential that Brake 1 and Brake 2 have different configurations. Fig. 14 is a diagram showing a variation of the configuration shown in Fig. 4. The brake system according to this variation includes a brake control unit 121C instead of brake control unit 121B (Fig. 4). Brake control unit 121C has the same configuration as brake control unit 121A. Brake control unit 121C includes a motion manager 141C and a brake ECU 142C. Motion manager 141C and brake ECU 142C are functionally identical to motion manager 141A and brake ECU 142A, respectively. Thus, the brake control unit on the first path (Brake1) and the brake control unit on the second path (Brake2) may be identical in configuration.

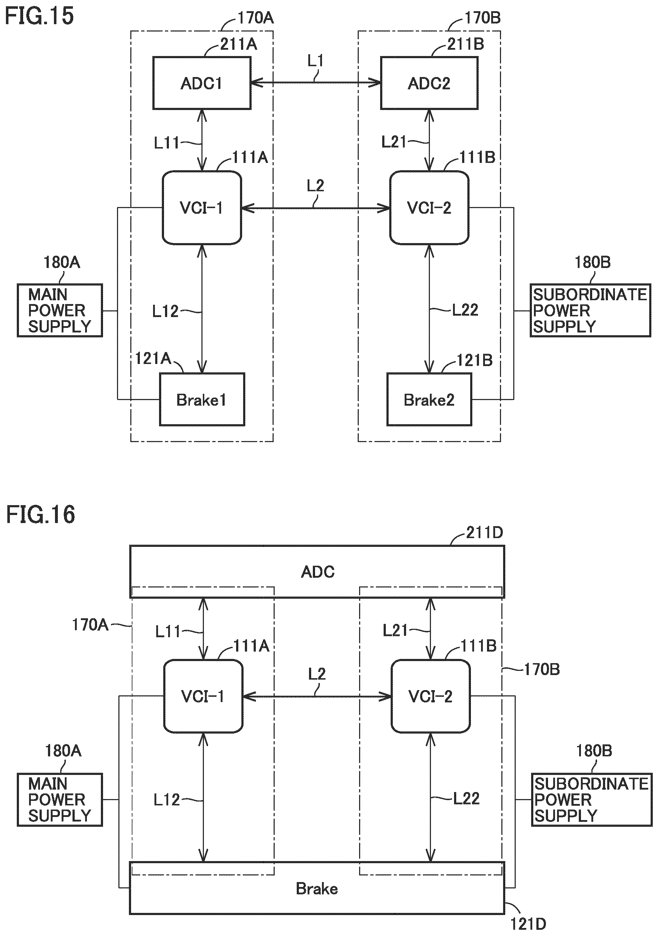

Fig. 15 is a diagram showing a first variation of the configuration shown in Fig. 3. The variation shown in Fig. 15 has communication lines L31 and L32 (Fig. 3) removed. In this variation, the third path does not exist. The first path (path 170A) corresponds to the main system, and the second path (path 170B) corresponds to the subordinate system.

Brake 1 and Brake 2 may have their functions implemented in a single controller. Furthermore, ADK 200 may have ADCs 211A and 211B with their functions implemented in a single controller. Fig. 16 is a diagram showing a second variation of the configuration shown in Fig. 3. In the variation indicated in Fig. 16, the base vehicle does not include brake control units 121A and 121B and instead includes a single controller having their functions (i.e., a brake control unit 121D). Furthermore, according to this variation, an autonomous driving kit does not include ADCs 211A and 211B and instead includes a single controller having their functions (i.e., an ADC 211D). In the variation indicated in Fig. 16, brake control unit 121D and ADC 211D are each included in both the first path (path 170A) and the second path (path 170B).

Although embodiments of the present disclosure have been described, it should be understood that the embodiments disclosed herein are by way of illustration and example only and not to be taken by way of limitation in any respect. The scope of the present disclosure is defined by the terms of the appended claims and intended to encompass any modification that falls within the meaning and scope equivalent to the terms of the claims.

## Claims

1. A vehicle (100) configured to allow an autonomous driving kit (200) to be mounted thereto, comprising:
a vehicle control interface box (110); and
a vehicle system (120),
the vehicle control interface box including a first controller (111A) and a second controller (111B),
the vehicle system including a brake device (121) configured to decelerate the vehicle,
the vehicle system (120) being configured to be capable of receiving a command from the autonomous driving kit (200) through each of a plurality of paths,
the plurality of paths including:
a first path via the first controller (111A); and
a second path via the second controller (111B),
the vehicle system (120) being configured to:
in response to only one of the plurality of paths failing while the vehicle (100) is autonomously driven, continue to autonomously drive the vehicle (100) based on the command received from the autonomous driving kit (200) through a path other than the failed path; and
in response to the first and second paths both failing while the vehicle (100) is autonomously driven, apply autonomous deceleration control to control the brake device (121) to decelerate the vehicle (100).

2. The vehicle (100) according to claim 1, wherein
the vehicle system (120) further includes a third controller (121A) and a fourth controller (121B) configured to control the brake device (121),
the first path is a path (170A) to pass the command from the autonomous driving kit (200) to reach the third controller (121A) via the first controller (111A), and
the second path is a path (170B) to pass the command from the autonomous driving kit (200) to reach the fourth controller (121B) via the second controller (111B).

3. The vehicle (100) according to claim 2, wherein the vehicle system (120) is configured so that:
the plurality of paths further include a third path to pass the command from the autonomous driving kit (200) to reach the third controller (121A) via the second controller (111B),
when the first path (170A) does not fail, the third controller (121A) controls the brake device (121) based on the command received from the autonomous driving kit (200) through the first path (170A), and
when the first path fails (170A) and the second and third paths each do not fail, the third controller (121A) controls the brake device (121) based on the command received from the autonomous driving kit (200) through the third path.

4. The vehicle (100) according to claim 3, wherein the vehicle system (120) is configured so that:
when the first and third paths both fail, the third controller (121A) or the fourth controller (121B) applies the autonomous deceleration control.

5. The vehicle (100) according to any one of claims 1 to 4, wherein
the first controller (111A) is configured to determine whether communication between the autonomous driving kit (200) and the first controller (111A) fails, and output a result of the determination to the vehicle system (120), and
the second controller (111A) is configured to determine whether communication between the autonomous driving kit (200) and the second controller (111A) fails, and output a result of the determination to the vehicle system (120).

6. The vehicle (100) according to any one of claims 1 to 4, wherein
the vehicle control interface box (110) is configured to switch the autonomous deceleration control between an enabled state and a disabled state based on a request received from the autonomous driving kit (200), and
the vehicle system (120) is configured to apply the autonomous deceleration control only when the autonomous deceleration control is enabled.

7. The vehicle (100) according to claim 6, wherein the vehicle control interface box (110) is configured to prohibit switching of enabling/disabling the autonomous deceleration control while the vehicle (100) is autonomously driven.

8. The vehicle (100) according to any one of claims 1 to 4, wherein the vehicle system (120) is configured to avoid obtaining a new command from the autonomous driving kit (200) while the autonomous deceleration control is applied, and continue the autonomous deceleration control until the vehicle (100) has a stationary status.

9. The vehicle (100) according to claim 8, wherein the vehicle system (120) is configured so that:
when the vehicle system (120) determines that the first and second paths both fail while the autonomous driving kit (200) transmits a deceleration request to decelerate the vehicle (100), the vehicle system (120) controls the brake device (121) in the autonomous deceleration control to cause deceleration for the vehicle (100) to approach a larger one of a deceleration requested by the deceleration request and a predetermined deceleration.

10. The vehicle (100) according to claim 9, wherein
the vehicle system (120) further includes a vehicle drive device (123C) configured to accelerate the vehicle (100), and is configured so that:
when the vehicle system (120) determines that the first and second paths both fail while the autonomous driving kit (200) transmits an acceleration request to accelerate the vehicle (100), the vehicle system (120) controls the vehicle drive device (123C) in the autonomous deceleration control to zero acceleration for the vehicle (100), and subsequently controls the brake device (121) in the autonomous deceleration control to cause deceleration for the vehicle (100) to approach a predetermined deceleration.
